# EUROPÄISCHE PATENTSCHRIFT

(11) **EP 1 347 275 B1**
(45) Veröffentlichungstag und Bekanntmachung des Hinweises auf die Patenterteilung: **27.07.2005**
(21) Anmeldenummer: 02007612.1
(22) Anmeldetag: 04.04.2002
(51) Int. Cl.: G01G 17/08, A01K 11/00, A01K 29/00

(54) **Fixierwaagen-Vorrichtung**
Weighing scale unit with fixation
Unité de pesage avec fixation

(30) Priorität: 21.03.2002 DE 10212429
(43) Veröffentlichungstag der Anmeldung: 24.09.2003
(73) Patentinhaber: Assfalg Qualitätshydraulik, 89597 Unterwachingen (DE)
(72) Erfinder: Assfalg, Alois, 89597 Unterwachingen (DE)
(74) Vertreter: Kiessling, Christian

(56) Entgegenhaltungen:
- WO-A-98/24323
- WO-A-98/41084
- US-A- 3 916 143
- US-A- 5 852 989

## Beschreibung

Die Erfindung betrifft eine Fixierwaagen-Vorrichtung mit einer Fixierungseinrichtung zum Fixieren eines Tieres, insbesondere eines Ferkels oder Schweins sowie einer Waageneinrichtung zur Gewichtbestimmung des Tieres, wobei die Fixierungseinrichtung zwei während eines Wiegevorgangs in einem fest vorgegebenen Winkel v-förmig zueinander angeordnete, parallel betriebene Umlaufbänder enthält, die jeweils eine Fixierungswand für ein zu wiegendes Tier bilden.

Fixierwaagen-Vorrichtungen der eingangs genannten Art sind im Stand der Technik seit längerem bekannt und werden dazu verwendet, Tiere zu wiegen, um sie in unterschiedliche Gewichtskategorien einzuteilen. Problematisch bei einem Wiegevorgang ist die dazu notwendige zeitweise Fixierung eines Tieres, da es bei den bekannten Vorrichtungen hierbei immer wieder zu Verletzungen der Tiere kommt. Es hat sich gezeigt, dass keine der bekannten Vorrichtungen in de Lage ist, eine große Anzahl von Tieren stressfrei, effektiv und schnell zu fixieren. Dementsprechend langwierig sind die Gewichtsbestimmungen mit Hilfe der bekannten Vorrichtungen.

Aus WO-A-98/24323 ist eine Vorrichtung zum Untersuchen lebendiger Tiere bekannt, wobei für eine Ultraschalluntersuchung ein Tier mittels mechanischer Immobilisierungseinrichtungen fixierbar ist.

Aus US-A-3 916 143 ist eine Vorrichtung bekannt, um ein lebendiges Tier mittels Laserstrahlen an einer geeigneten Stelle des Fells für eine spätere Identifizierung zu markieren.

Aus WO-A-98/41084 ist ein Verfahren und eine Vorrichtung bekannt zum elektronischen Markieren von Tieren bekannt, bei dem ein Chip mit spezifischen Informationen in den Körper eines betreffenden Tieres implantiert wird.

Aus US-A-5 852 989 ist ein Verfahren zum Fördern lebendiger Tiere bekannt, bei dem die Tiere auf einem mit Seitenwänden versehenen Förderband transportiert werden.

Aufgabe der Erfindung ist es, eine einheitliche Vorrichtung zum simultanen Fixieren und Gewichtsbestimmen in Form einer Fixierwaagen-Vorrichtung zu schaffen, mittels derer ein schnelles und stressfreies, gefahrloses und genaues sukzessives Messen der Gewichte einer großen Anzahl von Tieren ermöglicht ist.

Für eine Fixierwaagen-Vorrichtung der eingangs genannten Art wird diese Aufgabe dadurch gelöst, dass ein Bereich des geringsten Abstandes der Umlaufbänder so bemessen ist, dass er ungefähr der Breite eines Hufes oder Fußes eines zu wiegenden Tieres entspricht, und die Umlaufbänder in dem Bereich ihres geringsten Abstandes waagerecht angeordnete Vorsprünge aufweisen, die eine Trittfläche für ein zu wiegendes Tier bilden.

Bevorzugte Ausführungsformen der Erfindung sind Gegenstand der Unteransprüche.

Bei der erfindungsgemäßen Fixierwaagen-Vorrichtung wird durch die Merkmalskombination, dass ein Bereich des geringsten Abstandes der Umlaufbänder so bemessen ist, dass er ungefähr der Breite eines Hufes oder Fußes eines zu wiegenden Tieres entspricht, und die Umlaufbänder in dem Bereich ihres geringsten Abstandes waagerecht angeordnete Vorsprünge aufweisen, die eine Trittfläche für ein zu wiegendes Tier bilden, erreicht, dass eine Vorrichtung geschaffen ist, bei der die zwischen den Fixierungswänden gebildete keilförmige Aussparung eine ideale Lagerungsplattform für zu wiegenden Tiere bildet, da diese sich durch Wirkung ihres Eigengewichtes selbst zwischen den Fixierungswänden für einen Wiegevorgang fixieren, wobei die Fixierungswände in einem Winkel zueinander geneigt sind, der durch die Anatomie der Tiere vorgegeben ist um eine ergonomische Fixierung zu gewährleisten. So wird eine Fixierung erreicht, bei der keinerlei äußere Kraftaufwendung wie Druck oder Zug auf die Tiere benötigt wird, wodurch Verletzungen der Tiere weitestgehend vermieden werden. Da die Bewegungsrichtung der Umlaufbänder genau rechtwinklig zur Fixierungsrichtung erfolgt, werden die Tiere auch ohne weitere Kraftaufwendung aus der Fixierung entlassen. Der Transport der Tiere entlang dem durch das Transportband vorgegebenen Beförderungsweg wirkt somit synergistisch mit einem Fixierungsvorgang und einem damit verbundenen Wiegevorgang.

Gemäß einer ersten bevorzugten Ausführungsform der erfindungsgemäßen Vorrichtung ist vorgesehen, dass die Umlaufbänder als Unendlich-Laufbänder ausgeführt sind, die jeweils um zwei drehbar gelagerte Rollen geführt sind. Die Umlaufbänder sind dabei vorzugsweise in einem Winkel von 30° bis 50°, insbesondere 40° zueinander angeordnet.

Gemäß einer weiterer bevorzugter Ausführungsformen der erfindungsgemäßen Vorrichtung ist vorgesehen, dass der Bereich des geringsten Abstandes der Umlaufbänder bei Ferkeln auf etwa 3 cm bemessen ist. Des weiteren sind die Vorsprünge der beiden Umlaufbänder vorzugsweise jeweils mit Einkerbungen versehen, die in die Einkerbungen des Vorsprungs des jeweils anderen Umlaufbandes eingreifen. Dadurch wird eine feste, sichere Trittfläche gebildet.

Die Länge einer Fixierungswand der erfindungsgemäßen Vorrichtung ist von der Größe der zu wiegenden Tiere abhängig und ist bei Ferkeln auf etwa 1,5 m bis 4 m, insbesondere 2 m bemessen.

Gemäß einer weiteren bevorzugten Ausführungsform der erfindungsgemäßen Vorrichtung ist vorgesehen, dass die Umlaufbänder mit einer solchen Geschwindigkeit betreibbar sind, dass ein Tier für einen Zeitraum von etwa 3 sec in der Fixierungseinrichtung fixiert ist, wobei die Waageeinrichtung vorzugsweise so eingestellt ist, dass ein Wiegevorgang nach etwa 0,7 sec durchgeführt ist. Es hat sich gezeigt, dass dieser Zeitraum eine ausreichend genaue Gewichtsbestimmung ermöglicht.

Bei der erfindungsgemäßen Vorrichtung ist die Waageeinrichtung vorzugsweise unterhalb der Fixiereinrichtung angeordnet, wobei die Fixiereinrichtung zumindest indirekt auf der Waageeinrichtung abgestützt ist und dabei auch hängend angeordnet sein kann.

Gemäß einer weiteren wichtigen bevorzugten Ausführungsform der erfindungsgemäßen Vorrichtung ist vorgesehen, dass die Fixiereinrichtung mit einer Zuführeinrichtung zum Einbringen von Tieren versehen ist, wobei die Zuführeinrichtung ein eigenes Transportband aufweist, dessen Endbereich so gelagert ist, dass die Tiere aufrecht von oben in die Fixiereinrichtung einführbar sind.

Die Waageeinrichtung der erfindungsgemäßen Vorrichtung ist vorzugsweise als Digitalwaage ausgebildet, die Messergebnisse in Form elektronischer Signale abgibt und mit einem Computer verbunden ist, der so programmiert ist, dass er die Messergebnisse in vorherbestimmte Gewichtsklassen einteilt. Vorzugsweise sind fünf bis sieben unterschiedliche Gewichtsklassen vorgegeben, da dies in der Praxis eine ausreichende Sortierung darstellt, um die Tiere so weit zu trennen, dass aufgrund einer jeweils ähnlichen Stärke der Tiere Konkurrenzkämpfe untereinander weitestgehend ausbleiben. Des weiteren ist dies vorteilhaft für eine Verabreichung von Medikamenten an die Tiere, da die zu verabreichende gewichtsbezogene Medikamentenmenge dann sehr genau spezifisch dosiert werden kann.

Gemäß einer weiteren wichtigen bevorzugten Ausführungsform der erfindungsgemäßen Vorrichtung ist vorgesehen, dass die Fixiereinrichtung mit einer Selektionseinheit zusammenwirkt, wobei die Selektionseinheit ein weiteres Transportband sowie eine Mehrzahl von Klappen aufweist, denen jeweils eine Aktivierungseinheit zugeordnet ist, über die betreffende Klappe zu öffnen und zu schließen ist. Die Klappen zum Öffnen und Schließen sind dabei vorzugsweise um eine vertikal angeordnete Achse drehbar gelagert. Hinter jeder Klappe ist jeweils ein abgetrennter Raumbereich zur Aufnahme von Tieren jeweils gleicher Gewichtsklasse vorgesehen ist, wobei vorzugsweise vier bis sechs Klappen vorgesehen sind. Da das Ende eines Transportbandes einen weiteren Ausgang bildet sind somit fünf bis sieben Sortierungen ermöglicht.

Die Aktivierungseinheiten obiger bevorzugter Ausführungsform der Erfindung sind vorzugsweise von dem mit der Waageeinrichtung verbundenem Computer gesteuert, um ein auf dem Transportband der Selektionseinheit bewegtes Tier in einen entsprechenden, für eine entsprechende Gewichtskategorie vorgesehenen abgetrennten Raumbereich zu befördern.

Gemäß einer weiteren wichtigen bevorzugten Ausführungsform der erfindungsgemäßen Vorrichtung ist vorgesehen, dass die Waageeinrichtung eine Transpondereinheit enthält, die in der Lage ist, ein Datensignal, das von einem in einem Tier implantierten Mikrochip in Antwort auf ein entsprechendes Steuersignals ausgesendet worden ist, zu interpretieren, um ein auf dem Mikrochip gespeichertes Gewicht in den Computer einzulesen und mit einem aktuell gemessenen Gewicht zu vergleichen, um aufgrund der diesbezüglichen Gewichtsdifferenz gewichtsregulierende tierhaltungsspezifische Parameter wie Futtermenge u.ä. vorzugeben.

Gemäß einer anderen wichtigen bevorzugten Ausführungsform der erfindungsgemäßen Vorrichtung ist vorgesehen, dass die Fixiereinrichtung mit einer Kennzeichnungseinheit versehen ist, wobei ein fixiertes Tier mit einer spezifischen Kennzeichnung versehbar ist. Die Kennzeichnung ist dabei vorzugsweise sowohl auf die rechte als auch auf die linke Seite des Tieres eingebbar. Des weiteren ist die Kennzeichnung erfolgt mittels eines programmierbares Lasers und ist in Form eines Strichcodes ausführbar.

Gemäß einer weiteren bevorzugten Ausführungsform der erfindungsgemäßen Vorrichtung ist vorgesehen, dass eine Einrichtung zum automatischen Zählen der Tiere vorgesehen ist. Des weiteren ist vorzugsweise eine Druckeinheit vorgesehen, um die Ergebnisse der Wiegevorgänge in den jeweiligen Wiegeklassen zusammen mit einem Durchschnittsgewicht der Tiere sowie deren Stückzahl auszudrucken.

Die erfindungsgemäße Fixierwaagen-Vorrichtung wird im folgenden anhand einer bevorzugten Ausführungsform erläutert, die in den Figuren der Zeichnung dargestellt ist. Darin zeigen:
- Fig.1: eine bevorzugte Ausführungsform der erfindungsgemäßen Fixierwaagen-Vorrichtung in einer Ansicht von schräg vorne;
- Fig.2: die in Figur 1 dargestellte bevorzugte Ausführungsform der erfindungsgemäßen Fixierwaagen-Vorrichtung zusammen mit Zuführeinrichtung und Selektionseinheit in einer Ansicht von hinten;
- Fig.3: die in Figur 1 dargestellte bevorzugte Ausführungsform der erfindungsgemäßen Fixierwaagen-Vorrichtung zusammen mit Zuführeinrichtung und Selektionseinheit in einer Ansicht von oben;
- Fig.4: die in Figur 1 dargestellte bevorzugte Ausführungsform der erfindungsgemäßen Fixierwaagen-Vorrichtung zusammen mit Zuführeinrichtung und Selektionseinheit in einer Seitenansicht.

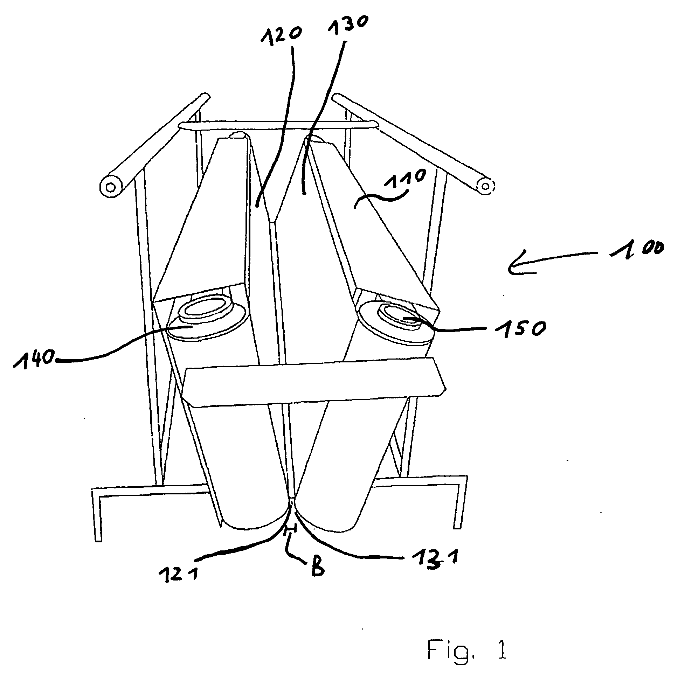

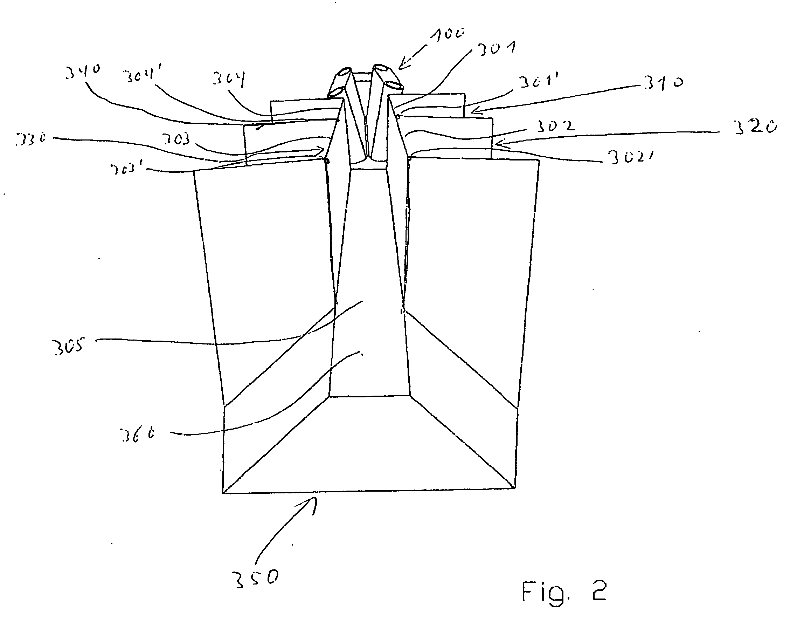

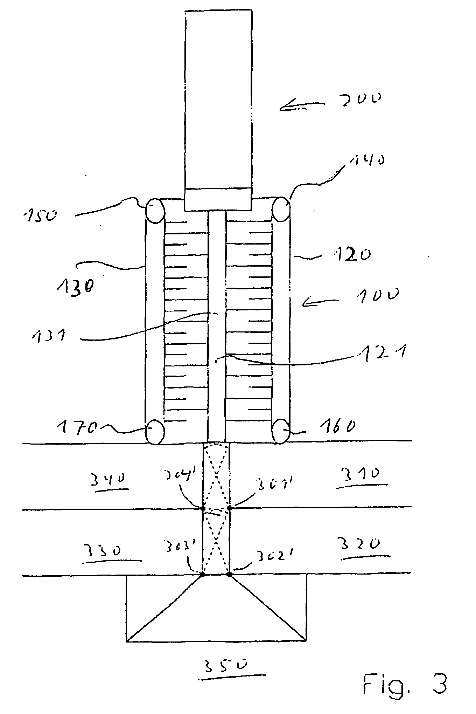

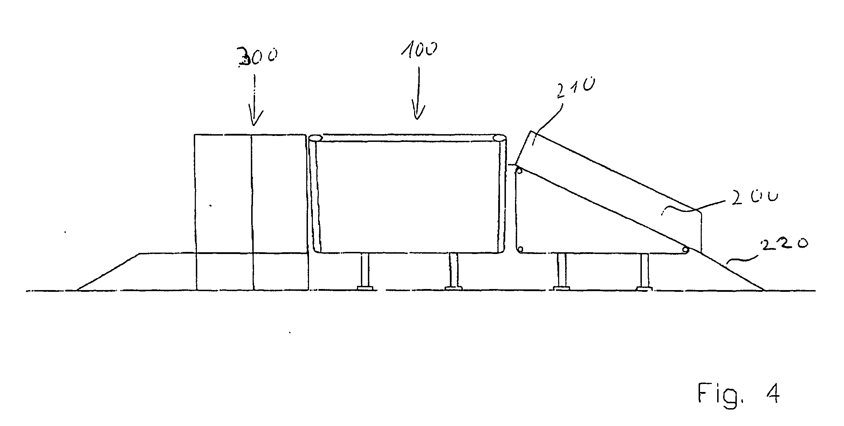

Die in den Figuren 1 bis 4 dargestellte erfindungsgemäße Fixierwaagen-Vorrichtung 100 weist eine Fixierungseinrichtung 110 zum Fixieren eines Tieres, insbesondere eines Ferkels oder Schweins sowie einer unter der Fixierungseinrichtung 110 angeordneten nicht dargestellten Waageneinrichtung zur Gewichtbestimmung des Tieres auf, wobei die Fixierungseinrichtung 110 zwei während eines Wiegevorgangs in einem fest vorgegebenen Winkel v-förmig zueinander angeordnete, parallel betriebene Umlaufbänder 120, 130 enthält, die jeweils eine Fixierungswand für ein zu wiegendes Tier bilden.

Die Umlaufbänder 120, 130 sind als Unendlich-Laufbänder ausgeführt, die jeweils um zwei drehbar gelagerte Rollen 140, 150, 160, 170 geführt sind, wobei die Umlaufbänder 120, 130 in einem Winkel von 40° angeordnet sind. Der Bereich des geringsten Abstandes B der Umlaufbänder 120, 130 ist so bemessen, dass er ungefähr der Breite eines Hufes eines zu wiegenden Ferkels entspricht, d.h. im vorliegenden Fall auf etwa 3 cm bemessen ist.

Die Umlaufbänder 120, 130 weisen in dem Bereich ihres geringsten Abstandes waagerecht angeordnete Vorsprünge 121, 131 auf, die eine Trittfläche für ein zu wiegendes Tier bilden, wobei die Vorsprünge der beiden Umlaufbänder 120, 130 jeweils Einkerbungen aufweisen, die in die Einkerbungen des Vorsprungs des jeweils anderen Umlaufbandes 120, 130 eingreifen.

Die Umlaufbänder 120, 130 sind mit einer solchen Geschwindigkeit betrieben, dass ein Tier für einen Zeitraum von etwa 3 sec in der Fixierungseinrichtung fixiert ist, wobei die Waageeinrichtung so eingestellt ist, dass ein Wiegevorgang nach etwa 0,7 sec durchgeführt ist. Eine Fixierungswand weist dabei eine Länge von etwa 1,5 m auf.

Die nicht dargestellte Waageeinrichtung ist unterhalb der Fixiereinrichtung 110 angeordnet, wobei die Fixiereinrichtung 110 zumindest indirekt auf der Waageeinrichtung abgestützt ist.

Die Fixiereinrichtung 110 mit einer Zuführeinrichtung 200 zum Einbringen von Tieren versehen, wobei die Zuführeinrichtung ein eigenes Transportband 220 aufweist, dessen Endbereich 210 so gelagert ist, dass die Tiere aufrecht von oben in die Fixiereinrichtung 110 einführbar sind.

Die nicht dargestellte Waageeinrichtung ist als Digitalwaage ausgebildet, die Messergebnisse in Form elektronischer Signale abgibt und mit einem nicht dargestellten Computer verbunden ist, der so programmiert ist, dass er die Messergebnisse in fünf unterschiedliche Gewichtsklassen einteilt.

Die Fixiereinrichtung 110 wirkt mit einer Selektionseinheit 300 zusammen, wobei die Selektionseinheit 300 ein weiteres Transportband 350 sowie vier Klappen 301, 302, 303 und 304 aufweist, denen jeweils eine nicht dargestellte Aktivierungseinheit zugeordnet ist, über die betreffende Klappe 301, 302, 303, 304 zu öffnen und zu schließen ist. Für ein Öffnen und Schließen sind die Klappen 301, 302, 303, 304 dabei jeweils um eine vertikal angeordnete Achse 301', 302', 303', 304' drehbar gelagert, und hinter jeder Klappe 301, 302, 303, 304 ist ein abgetrennter Raumbereich 310, 320, 330, 340 zur Aufnahme von Tieren jeweils gleicher Gewichtsklasse vorgesehen. Am Ende des Transportbandes 360 ist ein fünfter Ausgang 305 mit entsprechend abgetrenntem Raumbereich 310, 320, 330, 340 vorgesehen. Es werden somit fünf Sortierungen vorgenommen.

Die Aktivierungseinheiten der Klappen 301, 302, 303, 304 sind von dem Computer gesteuert, um ein auf dem Transportband 360 der Selektionseinheit 300 bewegtes Tier in einen entsprechenden, für eine entsprechende Gewichtskategorie vorgesehenen abgetrennten Raumbereich 310, 320, 330, 340, 350 zu befördern.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Fixierwaagen-Vorrichtung (100) mit einer Fixierungseinrichtung (110) zum Fixieren eines Tieres, insbesondere eines Ferkels oder Schweins sowie einer Waageneinrichtung zur Gewichtbestimmung des Tieres, wobei die Fixierungseinrichtung zwei während eines Wiegevorgangs in einem fest vorgegebenen Winkel v-förmig zueinander angeordnete, parallel betriebene Umlaufbänder (120, 130) enthält, die jeweils eine Fixierungswand für ein zu wiegendes Tier bilden, **dadurch gekennzeichnet, dass** ein Bereich des geringsten Abstandes der Umlaufbänder (120, 130) so bemessen ist, dass er ungefähr der Breite eines Hufes oder Fußes eines zu wiegenden Tieres entspricht, und die Umlaufbänder (120, 130) in dem Bereich ihres geringsten Abstandes waagerecht angeordnete Vorsprünge (121, 131) aufweisen, die eine Trittfläche für ein zu wiegendes Tier bilden.

2. Vorrichtung nach Anspruch 1, **dadurch gekennzeichnet, dass** die Umlaufbänder (120, 130) als Unendlich-Laufbänder ausgeführt sind, die jeweils um zwei drehbar gelagerte Rollen (140, 150, 160, 170)geführt sind.

3. Vorrichtung nach einem der Ansprüche 1 oder 2, **dadurch gekennzeichnet, dass** die Umlaufbänder (120, 130) in einem Winkel von 30° bis 50° angeordnet sind.

4. Vorrichtung nach Anspruch 3, **dadurch gekennzeichnet, dass** die Umlaufbänder (120, 130) in einem Winkel von 40° angeordnet sind.

5. Vorrichtung nach einem der Ansprüche 3 oder 4, **dadurch gekennzeichnet, dass** der Bereich des geringsten Abstandes der Umlaufbänder (120, 130) auf etwa 3 cm bemessen ist.

6. Vorrichtung nach einem der vorhergehenden Ansprüche, **dadurch gekennzeichnet, dass** die Vorsprünge (121, 131) der beiden Umlaufbänder (120, 130) jeweils Einkerbungen aufweisen, die in die Einkerbungen des Vorsprungs des jeweils anderen Umlaufbandes (120, 130) eingreifen.

7. Vorrichtung nach einem der vorhergehenden Ansprüche, **dadurch gekennzeichnet, dass** eine Fixierungswand eine Länge von etwa 1,5 m bis 4 m aufweist.

8. Vorrichtung nach Anspruch 7, **dadurch gekennzeichnet, dass** eine Fixierungswand eine Länge von etwa 2 m aufweist.

9. Vorrichtung nach einem der vorhergehenden Ansprüche, **dadurch gekennzeichnet, dass** die Umlaufbänder (120, 130) mit einer solchen Geschwindigkeit betreibbar sind, dass ein Tier für einen Zeitraum von etwa 3 sec in der Fixierungseinrichtung (110) fixiert ist.

10. Vorrichtung nach einem der vorhergehenden Ansprüche, **dadurch gekennzeichnet, dass** die Waageeinrichtung so eingestellt ist, dass ein Wiegevorgang nach etwa 0,7 sec durchgeführt ist.

11. Vorrichtung nach einem der vorhergehenden Ansprüche, **dadurch gekennzeichnet, dass** die Waageeinrichtung unterhalb der Fixiereinrichtung (110) angeordnet ist, wobei die Fixiereinrichtung (110) zumindest indirekt auf der Waageeinrichtung abgestützt ist.

12. Vorrichtung nach einem der vorhergehenden Ansprüche, **dadurch gekennzeichnet, dass** die Fixiereinrichtung (110) mit einer Zuführeinrichtung zum Einbringen von Tieren versehen ist, wobei die Zuführeinrichtung ein eigenes Transportband (350) aufweist, dessen Endbereich (210) so gelagert ist, dass die Tiere aufrecht von oben in die Fixiereinrichtung (110) einführbar sind.

13. Vorrichtung nach einem der vorhergehenden Ansprüche, **dadurch gekennzeichnet, dass** die Waageeinrichtung als Digitalwaage ausgebildet ist, die Messergebnisse in Form elektronischer Signale abgibt und mit einem Computer verbunden ist, der so programmiert ist, dass er die Messergebnisse in vorherbestimmte Gewichtsklassen einteilt.

14. Vorrichtung nach Anspruch 13, **dadurch gekennzeichnet, dass** fünf bis 7 unterschiedliche Gewichtsklassen vorgegeben sind.

15. Vorrichtung nach einem der vorhergehenden Ansprüche, **dadurch gekennzeichnet, dass** die Fixiereinrichtung (110) mit einer Selektionseinheit (300) zusammenwirkt, wobei die Selektionseinheit (300) ein weiteres Transportband (350) sowie eine Mehrzahl von Klappen (301, 302, 303, 304) aufweist, denen jeweils eine Aktivierungseinheit zugeordnet ist, über die betreffende Klappe (301, 302, 303, 304) zu öffnen und zu schließen ist.

16. Vorrichtung nach Anspruch 15, **dadurch gekennzeichnet, dass** die Klappen (301, 302, 303, 304) zum Öffnen und Schließen um eine vertikal angeordnete Achse (301', 302', 303', 304') drehbar gelagert sind und hinter jeder Klappe (301, 302, 303, 304) ein abgetrennter Raumbereich (310, 320, 330, 340) zur Aufnahme von Tieren jeweils gleicher Gewichtsklasse vorgesehen ist.

17. Vorrichtung nach einem der Ansprüche 15 oder 16, **dadurch gekennzeichnet, dass** vier bis sechs Klappen (301, 302, 303, 304) vorgegeben sind.

18. Vorrichtung nach den Ansprüchen 15 bis 17, **dadurch gekennzeichnet, dass** die Aktivierungseinheiten von dem mit der Waageeinrichtung verbundenen Computer gesteuert sind, um ein auf dem Transportband (350) der Selektionseinheit (300) bewegtes Tier in einen entsprechenden, für eine entsprechende Gewichtskategorie vorgesehenen abgetrennten Raumbereich (310, 320, 330, 340)) zu befördern.

19. Vorrichtung nach Anspruch 18, **dadurch gekennzeichnet, dass** die Waageeinrichtung eine Transpondereinheit enthält, die in der Lage ist, ein Datensignal, das von einem in einem Tier implantierten Mikrochip in Antwort auf ein entsprechendes Steuersignal ausgesendet worden ist, zu interpretieren, um ein auf dem Mikrochip gespeichertes Gewicht in den Computer einzulesen und mit einem aktuell gemessenen Gewicht zu vergleichen, um aufgrund der diesbezüglichen Gewichtsdifferenz gewichtsregulierende tierhaltungsspezifische Parameter wie Futtermenge u.ä. vorzugeben.

20. Vorrichtung nach einem der vorhergehenden Ansprüche, **dadurch gekennzeichnet, dass** die Fixiereinrichtung (110) mit einer Kennzeichnungseinheit versehen ist, wobei ein fixiertes Tier mit einer spezifischen Kennzeichnung versehbar ist.

21. Vorrichtung nach Anspruch 22, **dadurch gekennzeichnet, dass** die Kennzeichnung sowohl auf die rechte als auch auf die linke Seite des Tieres eingebbar ist.

22. Vorrichtung nach einem der Ansprüche 22 und 23, **dadurch gekennzeichnet, dass** die Kennzeichnung mittels eines programmierbares Lasers erfolgt und in Form eines Strichcodes ausführbar ist.

23. Vorrichtung nach einem der vorhergehenden Ansprüche, **dadurch gekennzeichnet, dass** eine Einrichtung zum automatischen Zählen der Tiere vorgesehen ist.

24. Vorrichtung nach einem der vorhergehenden Ansprüche, **dadurch gekennzeichnet, dass** eine Druckeinheit vorgesehen ist, um die Ergebnisse der Wiegevorgänge in den jeweiligen Wiegeklassen zusammen mit einem Durchschnittsgewicht der Tiere sowie deren Stückzahl auszudrucken.

## Claims

1. A restraint weighing device (100) having a restraining unit (110) to restrain an animal, particularly a piglet or pig, and a weighing unit for determining the weight of said animal and located beneath said restraining unit (110), which restraining unit (110) has two concurrently driven conveyor belts (120, 130) in angled relationship to each other so as to form a predefined "V" during the weighing procedure, each belt forming a restraining wall for said animal to be weighed.

2. A device as defined in claim 1, **characterized in that** said conveyor belts (120, 130) are in the form of continuous conveyor belts each of which is guided around two pivoted rollers (140, 150, 160, and 170).

3. A device as defined in claim 1 or claim 2, **characterized in that** said continuous conveyor belts (120, 130) enclose an angle of from 30° to 50°.

4. A device as defined in claim 3, **characterized in that** said continuous conveyor belts (120, 130) enclose an angle of 40°.

5. A device as defined in claim 3 or claim 4, **characterized in that** the region of shortest distance between said conveyor belts (120, 130) has a width of approximately 3 cm.

6. A device as defined in any one of the previous claims, **characterized in that** projections (121, 131) on the two conveyor belts (120, 130) have notches, the notches of the projections on one of said conveyor belts meshing with those on the projections of said other conveyor belt (120, 130).

7. A device as defined in any one of the previous claims, **characterized in that** a restraining wall has a length of approximately from 1.5 m to 4 m.

8. A device as defined in claim 7, **characterized in that** a restraining wall has a length of approximately 2 m.

9. A device as defined in any one of the previous claims, **characterized in that** said conveyor belts (120, 130) are driven at such a speed that an animal is restrained in the restraining unit (110) for a period of approximately 3 sec.

10. A device as defined in any one of the previous claims, **characterized in that** said weighing unit is adjusted such that a weighing procedure is complete after approximately 0.7 sec.

11. A device as defined in any one of the previous claims, **characterized in that** said weighing unit is disposed beneath said restraining unit (110), which restraining unit (110) is supported at least indirectly by said weighing unit.

12. A device as defined in any one of the previous claims, **characterized in that** said restraining unit (110) is provided with a lead-in unit for inputting the animals, which lead-in unit has its own conveyor belt (350), whose end region (210) is so mounted that the animals are guided downwardly into said restraining unit (110) in upright posture.

13. A device as defined in any one of the previous claims, **characterized in that** said weighing unit is in the form of a digital balance which records the measurements as electronic signals and which is connected to a computer programmed to grade the readings into predetermined weight classes.

14. A device as defined in claim 13, **characterized in that** from five to seven different weight classes are specified.

15. A device as defined in any one of the previous claims, **characterized in that** said restraining unit (110) cooperates with a selection unit (300), which selection unit (300) has another conveyor belt (350) and a plurality of hatches (301, 302, 303, and 304), to each of which an actuating unit is assigned, by means of which said hatches (301, 302, 303, and 304) can be opened and closed.

16. A device as defined in claim 15, **characterized in that** said hatches (301, 302, 303, 304) are pivotally mounted on vertical shafts (301', 302', 303', and 304') to enable opening and closing thereof and behind each hatch (301, 302, 303, and 304) there is provided a separated enclosure (310, 320, 330, and 340) for the accommodation of animals of the same weight class.

17. A device as defined in claim 15 or claim 16, **characterized in that** from four to six hatches (301, 302, 303, and 304) are provided.

18. A device as defined in any one of claims 15 through 17, **characterized in that** the actuating units are controlled by the computer connected to said weighing unit for the purpose of guiding an animal transported by said conveyor belt (350) from said selection unit (300) into an appropriate separated enclosure (310, 320, 330, and 340) corresponding to a specific weight category.

19. A device as defined in claim 18, **characterized in that** said weighing unit is equipped with a transponder unit that is able to interpret a data signal sent out by a microchip implanted in an animal in response to a corresponding control signal, in order to read a weight stored on the microchip into the computer and to compare it with the present weight of the animal, and, based on the difference between the two weights, to make necessary adjustments to weight-controlling animal husbandry parameters such as the feed ration and the like.

20. A device as defined in any one of the previous claims, **characterized in that** said restraining unit (110) is provided with a marking unit, by means of which a restrained animal can be provided with a specific identifier.

21. A device as defined in claim 20, **characterized in that** said identifier can be applied to both right and left sides of the animal.

22. A device as defined in claim 20 or claim 21, **characterized in that** said marking is effected using a programmable laser and can take the form of a bar code.

23. A device as defined in any one of the previous claims, **characterized in that** means for automatically counting the animals is provided.

24. A device as defined in any one of the previous claims, **characterized in that** a printing unit is provided to print out the weights in the appropriate weight classes together with a mean weight of the animals as well as the number of animals in each given weight class.

## Revendications

1. Installation de pesage/fixage (100) comprenant un dispositif de fixage (110) pour fixer un animal, en particulier un cochonnet ou un cochon, et un dispositif de pesage pour la détermination du poids de l'animal, le dispositif de fixage (110) comportant deux bandes tournantes (120, 130) actionnées parallèlement, disposées l'une par rapport à l'autre en un angle prédonné, en configuration d'un V, pendant l'opération de pesage, et constituant chacune une paroi de fixage pour un animal à peser,
**caractérisée en ce qu'**une zone d'espacement minimale entre les bandes tournantes (120, 130) est dimensionnée de façon à ce qu'elle correspond à peu près à la largeur d'un sabot ou pied d'un animal à peser, et que les bandes tournantes (120, 130) présentent, dans la zone de leur espacement minimale, des parties en saillie (121, 131) disposées horizontalement et constituant une surface de marche-pied pour un animal à peser.

2. Installation selon la revendication 1,
**caractérisée en ce que** les bandes tournantes (120, 130) sont prévues en forme de bandes sans fin tournant respectivement autour de deux rouleaux (140, 150, 160, 170) montés de façon rotative.

3. Installation selon l'une quelconque des revendications 1 ou 2,
**caractérisée en ce que** les bandes tournantes (120, 130) sont disposées de façon à former entre elles un angle de 30° à 50°.

4. Installation selon la revendication 3,
**caractérisée en ce que** les bandes tournantes (120, 130) sont disposées de façon à former entre elles un angle de 40°.

5. Installation selon l'une quelconque des revendications 3 ou 4,
**caractérisée en ce que** la zone d'espacement minimale entre les bandes tournantes (120, 130) est dimensionnée à environ 3 cm.

6. Installation selon l'une quelconque des revendications préalables,
**caractérisée en ce que** les parties en saillie (121, 131) des deux bandes tournantes (120, 130) présentent chacune des entailles venant s'engager mutuellement dans les entailles de la partie en saillie de l'autre des bandes tournantes (120, 130).

7. Installation selon l'une quelconque des revendications préalables,
**caractérisée en ce qu'** une paroi de fixage a une longueur d'environ 1,5 m à 4 m.

8. Installation selon la revendication 7,
**caractérisée en ce qu'** une paroi de fixage a une longueur d'environ 2 m.

9. Installation selon l'une quelconque des revendications préalables,
**caractérisée en ce que** les bandes tournantes (120, 130) peuvent être actionnées à une vitesse telle qu'un animal est fixé dans le dispositif de fixage (110) pendant une durée d'environ 3 sec.

10. Installation selon l'une quelconque des revendications préalables,
**caractérisée en ce que** le dispositif de pesage est réglé de façon à ce qu'une opération de pesage soit réalisée pendant 0,7 sec.

11. Installation selon l'une quelconque des revendications préalables,
**caractérisée en ce que** le dispositif de pesage est disposé au-dessous du dispositif de fixage (110), ce dispositif de fixage (110) étant appuyé, au moins indirectement, sur le dispositif de pesage.

12. Installation selon l'une quelconque des revendications préalables,
**caractérisée en ce que** le dispositif de fixage (110) est muni d'un mécanisme d'amenée pour faire entrer les animaux, ce mécanisme d'amenée présentant à son tour une bande de transport (220) dont la zone de sortie (210) est disposée de façon à ce que les animaux peuvent être amenés, debout et d'en haut, dans le dispositif de fixage (110).

13. Installation selon l'une quelconque des revendications préalables,
**caractérisée en ce que** le dispositif de pesage est constitué par une balance numérique fournissant les résultats de mesure en forme de signaux électroniques et connectée à un ordinateur qui est programmé de façon à trier les résultats de mesure selon des catégories de poids prédéterminées.

14. Installation selon la revendication 13,
**caractérisée en ce que** cinq différentes catégories de poids sont prédonnées.

15. Installation selon l'une quelconque des revendications préalables,
**caractérisée en ce que** le dispositif de fixage (110) coopère avec une unité de sélection (300), l'unité de sélection 300 présentant une autre bande de transport (360) et une pluralité de trappes (301, 302, 303 et 304) auxquelles est attribué à chacune une unité d'activation permettant d'ouvrir et de fermer la trappe respective (301, 302, 303, 304).

16. Installation selon la revendication 15,
**caractérisée en ce que** pour l'ouverture et la fermeture, les trappes (301, 302, 303 et 304) sont montées de façon pivotante autour des axes verticaux respectifs (301', 302', 303', 304'), et **en ce que** derrière chaque trappe (301, 302, 303, 304), il y a prévu un compartiment séparé correspondant (310, 320, 330, 340) recevant respectivement les animaux d'une même catégorie de poids.

17. Installation selon l'une quelconque des revendications 15 ou 16,
**caractérisée en ce que** l'on a prévu quatre ou six trappes (301, 302, 303, 304).

18. Installation selon les revendications 15 à 17,
**caractérisée en ce que** les unités d'activation sont commandées par l'ordinateur connecté au dispositif de pesage afin de transférer un animal convoyé sur la bande de transport (360) de l'unité de sélection (300) dans un compartiment séparé (310, 320, 330, 340) correspondant prévu pour une catégorie de poids correspondante.

19. Installation selon la revendication 18,
**caractérisée en ce que** le dispositif de pesage comprend un transpondeur qui est en mesure d'interpréter un signal de données émis par une microplaquette implantée dans un animal, en réponse à un signal de commande correspondant, pour mettre en mémoire dans l'ordinateur un poids mémorisé sur la microplaquette et de le comparer à un poids mesuré actuellement, afin de déterminer, à la base de la différence de ces deux valeurs de poids, des paramètres de réglage de poids spécifiques pour la détention d'animaux comme par ex. la quantité de fourrage.

20. Installation selon l'une quelconque des revendications préalables,
**caractérisée en ce que** le dispositif de fixage (110) est muni d'une unité de marquage permettant d'appliquer une marque distinctive spécifique sur un animal fixé.

21. Installation selon la revendication 20,
**caractérisée en ce que** la marque distinctive peut être appliquée soit sur le côté droit soit sur le côté gauche de l'animal.

22. Installation selon l'une quelconque des revendications 20 ou 21,
**caractérisée en ce que** le marquage est effectué au moyen d'un laser programmable et peut être réalisé en forme d'un code à barres.

23. Installation selon l'une quelconque des revendications préalables,
**caractérisée en ce que** l'on a prévu un dispositif de comptage automatique des animaux.

24. Installation selon l'une quelconque des revendications préalables,
**caractérisée en ce que** l'on a prévu une unité imprimante pour sortir sur papier les résultats des opérations de pesage pour les catégories de poids respectives, ensemble avec un poids moyen des animaux ainsi que le nombre d'animaux.
